# FASCICULE DE BREVET EUROPEEN

(11) **EP 4 419 422 B1**
(45) Date de publication et mention de la délivrance du brevet: **03.09.2025**
(21) Numéro de dépôt: 22803011.0
(22) Date de dépôt: 19.10.2022
(51) Int. Cl.: B64D 11/06

(54) **STRUCTURE SOUPLE POUR LA CRÉATION D'UN ESPACE DE REPOS A L'INTÉRIEUR D'UNE CABINE D'AÉRONEF**
FLEXIBLE STRUKTUR ZUR SCHAFFUNG EINES RUHERAUMS IN EINER FLUGZEUGKABINE
FLEXIBLE STRUCTURE FOR CREATING A REST SPACE INSIDE AN AIRCRAFT CABIN

(30) Priorité: 20.10.2021 FR 2111122
(43) Date de publication de la demande: 28.08.2024
(73) Titulaire: Safran Seats, 78370 Plaisir (FR)
(72) Inventeur: GLAIN, Arthur K., 77550 Moissy-Cramayel (FR)
(74) Mandataire: Marconnet, Sébastien
(86) Numéro de dépôt international: PCT/EP2022/079101
(87) Numéro de publication internationale: WO 2023/067000

(56) Documents cités:
- EP-A1- 3 309 072
- WO-A1-2018/033599
- US-A1- 2021 163 139

## Description

La présente invention porte sur une structure souple pour la création d'un espace de repos à l'intérieur d'une cabine d'aéronef, notamment une cabine d'avion.

On connaît des dispositifs permettant de créer un espace de repos autour d'un siège de l'avion, notamment un siège de la classe "Affaires" (ou "Business Class" en anglais), afin de permettre aux membres de l'équipage de se reposer au sein de la cabine d'avion parmi les passagers.

Les solutions actuellement employées consistent à tendre des rideaux autour d'un siège de classe Affaires. Ces derniers protègent du vis-à-vis avec les autres passagers durant les phases de sommeil. Ces rideaux protègent également de la lumière et de la promiscuité avec les autres passagers pour offrir davantage de confort et d'intimité aux membres d'équipage.

Ces rideaux posent toutefois des problèmes esthétiques ainsi que des problèmes d'intégration au sein de la cabine d'avion. En effet, les rideaux nécessitent l'installation de modules encombrants et disgracieux, tels que des rails apparents qui dégradent la qualité perçue en cabine par les passagers. L'ajout de rails externes peut également poser des problèmes de sécurité en cas de crash.

Par ailleurs, l'utilité de ces rideaux n'est pas clairement communiquée aux passagers. Cela peut amener les passagers à s'interroger sur leur fonction dans la cabine. Les passagers peuvent notamment se demander si ces rideaux sont utilisés pour cacher un siège cassé ou former une tente médicale. La curiosité de certains passagers pouvant être tentés de regarder derrière les rideaux est susceptible de déranger le repos des membres d'équipage. Il peut en résulter des situations gênantes autant pour les passagers que pour les membres d'équipage.

Ainsi, les dispositifs à rideaux connus ne permettent pas aux membres d'équipage de dormir de manière confortable et isolée des autres passagers au sein de la cabine. Ces systèmes ne répondent pas non plus aux critères qualitatifs en termes de finition et d'esthétisme pour une cabine de type classe Affaires.

Le document EP3309072 décrit une cloison d'intimité pour un siège ayant un cadre recouvert de tissu. La cloison d'intimité présente une configuration repliée et une configuration déployée qui définit un périmètre fermé autour du siège.

Le document WO2018/033599 décrit un arrangement de sièges, notamment destiné à être installé dans une cabine d'avion, comprenant au moins une unité de siège avant et au moins une unité de siège arrière situées l'une derrière l'autre, un passage transversal étant disposé entre l'unité de siège avant et l'unité de siège arrière pour permettre un accès à un couloir de circulation. Des moyens de fermeture mobiles sont aptes à obturer au moins partiellement le passage transversal lorsque les moyens de fermeture sont déployés.

Le document US2021/163139 décrit un arrangement de sièges, notamment destiné à être installé dans une cabine d'avion, comprenant au moins une unité de siège avant et au moins une unité de siège arrière situées l'une derrière l'autre, un passage transversal étant disposé entre l'unité de siège avant et l'unité de siège arrière pour permettre un accès à un couloir de circulation. Des moyens de fermeture au moins en partie flexibles sont mobiles entre une position rangée dans laquelle les moyens de fermeture sont dégagés du passage et une position déployée dans laquelle les moyens de fermeture obturent le passage.

L'invention vise à remédier efficacement aux inconvénients précités en proposant un ensemble pour une cabine d'aéronef comportant:
- une unité de siège arrière comportant un siège et une coque d'intimité s'étendant au moins en partie autour du siège,
- une unité de siège avant comportant un siège et une coque d'intimité s'étendant au moins en partie autour du siège,
- un passage d'accès à un couloir de circulation s'étendant entre l'unité de siège arrière et l'unité de siège avant,
- une structure souple amovible comportant, dans un état déployé, une portion supérieure s'étendant au-dessus du siège de l'unité de siège arrière entre la coque d'intimité de l'unité de siège arrière et la coque d'intimité de l'unité de siège avant, et
- une portion latérale s'étendant verticalement entre l'unité de siège arrière et l'unité de siège avant pour obturer le passage d'accès au couloir de circulation,
- de sorte que la structure souple délimite, avec la coque de l'unité de siège arrière et la coque de l'unité de siège avant, un espace clos de repos autour du siège de l'unité de siège arrière.

L'invention permet ainsi, grâce à l'utilisation de la structure souple amovible, de s'intégrer harmonieusement dans une cabine d'aéronef sans dégrader l'aspect esthétique ni la qualité perçue d'une cabine de type classe affaires. En effet, l'invention ne nécessite pas l'ajout de modules encombrants et visuellement disgracieux en cabine, tel que la pose de rails apparents. En outre, lorsque la solution n'est pas déployée, la structure souple peut être discrètement rangée dans le compartiment sans gêner les passagers. L'invention permet également d'améliorer la séparation entre l'espace de repos réservé au personnel de bord et le reste de la cabine. Les conditions de repos du personnel de bord sont donc également améliorées. L'invention présente également un caractère économique, dans la mesure où elle est simple à produire et n'induit quasiment aucune modification de la cabine.

Selon une réalisation de l'invention, au moins un dispositif de maintien est apte à assurer un maintien de la structure souple sur une coque d'intimité.

Selon une réalisation de l'invention, le dispositif de maintien comporte au moins un plot saillant ménagé dans une portion de la coque d'intimité destiné à s'insérer à l'intérieur d'une ouverture réalisée dans la structure souple.

Selon une réalisation de l'invention, le dispositif de maintien comporte un rabat relié à la structure souple, ledit rabat étant destiné à être fixé sur une portion de la coque d'intimité.

Selon une réalisation de l'invention, le rabat est réalisé dans un matériau plastique souple.

Selon une réalisation de l'invention, le rabat présente une forme en U de façon à pouvoir entourer au moins partiellement une portion de la coque d'intimité.

Selon une réalisation de l'invention, la structure souple comporte un élément d'appui destiné à venir se plaquer contre une portion d'une coque d'intimité.

Selon une réalisation de l'invention, l'élément d'appui présente une forme en L ayant un angle plaqué contre un angle correspondant d'une coque d'intimité d'une unité de siège.

Selon une réalisation de l'invention, la structure souple comporte au moins un insert de positionnement destiné à venir en appui contre une zone correspondante d'une unité de siège ou d'une paroi de la cabine d'aéronef.

Selon une réalisation de l'invention, la structure souple est munie d'au moins une sangle de façon à pouvoir augmenter un volume interne de l'espace clos de repos.

Selon une réalisation de l'invention, la structure souple présente une configuration asymétrique par rapport à un plan transversal médian, de sorte qu'une hauteur de la structure souple mesurée par rapport à un plancher de la cabine d'aéronef à l'endroit de la coque d'intimité de l'unité de siège arrière est supérieure à une hauteur de la structure souple mesurée par rapport au plancher de la cabine d'aéronef à l'endroit de la coque d'intimité de l'unité de siège avant.

Selon une réalisation de l'invention, la structure souple est réalisée de préférence dans un matériau flexible, notamment un matériau textile.

Selon une réalisation de l'invention, la structure souple est réalisée dans un matériau rembourré.

Selon une réalisation de l'invention, la structure souple comporte un marquage sous forme d'un texte et/ou d'un symbole indiquant que la structure souple délimite un espace clos de repos réservé aux membres d'équipage.

Selon une réalisation de l'invention, la structure souple est personnalisable aux couleurs d'une compagnie aérienne.

L'invention a également pour objet une cabine d'aéronef comportant l'ensemble tel que défini précédemment.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
[Fig. 1] [Fig. 2] Les figures 1 et 2 sont des vues en perspective d'une partie d'une cabine d'avion respectivement avant et après la mise en place d'une structure souple rapportée selon l'invention permettant la création d'un espace clos de repos pour les membres d'équipage;
[Fig. 3] La figure 3 est une vue en perspective détaillée d'un dispositif de maintien de la structure souple muni d'un plot saillant issu d'une coque d'intimité destiné à coopérer avec une ouverture réalisée dans la structure souple;
[Fig. 4] La figure 4 est une vue de dessus d'une partie de la structure souple fixée sur une coque d'intimité de l'unité de siège avant au moyen d'un dispositif de maintien de la figure 3;
[Fig. 5a] [Fig. 5b] Les figures 5a et 5b sont des vues en perspective illustrant la mise en place d'une structure souple selon l'invention permettant la création d'un espace clos de repos pour les membres d'équipage;
[Fig. 6] La figure 6 est une vue en perspective montrant la structure souple à l'état plié dans les mains d'un membre d'équipage;
[Fig. 7] La figure 7 est une vue en perspective d'une variante de réalisation de la structure souple mise en place autour d'une unité de siège pour la création d'un espace clos de repos pour les membres d'équipage;
[Fig. 8] La figure 8 est une vue en perspective détaillée d'un dispositif de maintien de la structure souple muni d'un rabat destiné à fixer la structure souple sur une portion d'une coque d'intimité d'une unité de siège;
[Fig. 9] La figure 9 est une vue en perspective détaillée d'un élément d'appui ménagé dans un bord de la structure souple assurant un indexage en position de la structure souple par rapport à une coque d'intimité d'une unité de siège;
[Fig. 10] La figure 10 est une vue en perspective détaillée d'un insert de positionnement pouvant être ménagé dans la structure souple;
[Fig. 11a] [Fig. 11b] Les figures 11a et 11b sont des vues en perspective illustrant la mise en place du mode de réalisation de la structure souple selon l'invention à rabats permettant la création d'un espace clos de repos pour les membres d'équipage;
[Fig. 12] La figure 12 illustre l'utilisation de sangles permettant d'augmenter un volume de l'espace de repos délimité par la structure souple;
[Fig. 13] La figure 13 est une vue en perspective d'un mode de réalisation d'un espace clos de repos ayant une configuration asymétrique.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par ailleurs, les termes relatifs du type "avant", "arrière", "supérieur", "inférieur" sont entendus par référence au sens commun que leur donnerait une personne installée sur un siège autour duquel est déployée la structure souple selon l'invention pour former un espace clos de repos.

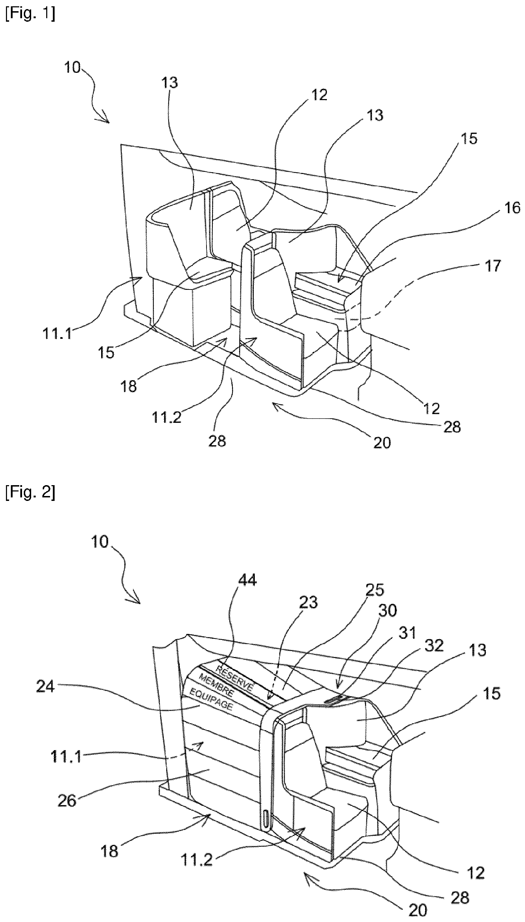

La figure 1 montre une cabine d'avion 10 comportant une pluralité d'unités de sièges 11.1, 11.2 par exemple de type classe affaires. Classiquement, la cabine d'avion 10 comporte plusieurs colonnes d'unités de sièges 11.1, 11.2 situées les unes derrière les autres. Deux unités de siège 11.1, 11.2 ont toutefois été représentées sur la figure afin de faciliter la compréhension de l'invention.

On distingue une unité de siège arrière 11.1 comportant un siège 12 et une coque d'intimité 13 s'étendant au moins en partie autour du siège 12, et une unité de siège avant 11.2 comportant un siège 12 et une coque d'intimité 13 s'étendant au moins en partie autour du siège 12. Une coque d'intimité 13 permet ainsi d'isoler le passager de l'unité de siège 11.1, 11.2 correspondante par rapport à l'environnement extérieur.

Un siège 12 pourra offrir à un passager différentes positions de confort, d'une position "assise" jusqu'à une position "lit", dans laquelle le siège 12 définit un plan de couchage sensiblement horizontal pour que le passager puisse s'allonger. Des positions intermédiaires de confort sont aussi proposées, telles que la position "relax" dans laquelle un dossier du siège 12 est fortement incliné. Généralement, ces positions intermédiaires sont obtenues par l'inclinaison du dossier pivotant autour d'un axe horizontal et perpendiculaire à un axe d'extension du siège 12. Le passager peut rester sur le siège 12 lors de transitions entre les différentes positions.

Une unité de siège 11.1, 11.2 pourra également comporter un meuble latéral 15 ayant une face supérieure 16 sur laquelle le passager pourra poser des objets. Le meuble latéral 15 pourra être muni d'un logement de pieds 17 destiné à recevoir les pieds d'un passager d'un siège 12 arrière correspondant, notamment lorsque le siège 12 arrière est en position "lit". Ainsi, l'ouverture du logement de pieds 17 est dirigée vers le siège 12 situé immédiatement derrière le meuble 15 de l'unité de siège.

Un passage d'accès 18 à un couloir de circulation 20 s'étend entre l'unité de siège arrière 11.1 et l'unité de siège avant 11.2. Ce passage d'accès 18 permet au passager de l'unité de siège arrière 11.1 d'accéder au couloir de circulation 20.

Afin de créer un espace clos de repos 23 autour de l'unité de siège arrière 11.1, on utilise une structure souple 24 qui est rapportée par rapport aux unités de sièges 11.1, 11.2, tel que cela est représenté sur la figure 2. La structure souple 24 comporte, dans un état déployé, une portion supérieure 25 s'étendant au-dessus du siège 12 de l'unité de siège arrière 11.1 entre la coque d'intimité 13 de l'unité de siège arrière 11.1 et la coque d'intimité 13 de l'unité de siège avant 11.2. La structure souple 24 comporte également une portion latérale 26 s'étendant verticalement entre l'unité de siège arrière 11.1 et l'unité de siège avant 11.2 pour obturer le passage d'accès au couloir de circulation. Ainsi, la structure souple 24 amovible délimite, avec la coque d'intimité 13 de l'unité de siège arrière 11.1 et la coque d'intimité 13 de l'unité de siège avant 11.2, un espace clos de repos 23 autour du siège 12 de l'unité de siège arrière 11.1.

Dans l'exemple représenté, la portion supérieure 25 pourra s'étendre majoritairement dans un plan horizontal par rapport au plancher 28 de la cabine d'avion. En variante, la portion supérieure 25 pourra s'étendre dans un plan formant un angle non nul par rapport au plancher 28. L'angle du plan dans lequel s'étend la portion supérieure 25 par rapport au plancher 28 pourra être de quelques degrés, notamment compris en 0 et 30 degrés. La portion latérale 26 s'étend majoritairement dans un plan perpendiculaire au plancher 28. La portion latérale 26 est de préférence réalisée d'un seul tenant avec la portion supérieure 25. La structure souple 24 est ainsi réalisée en une seule pièce.

La structure souple 24 est réalisée de préférence dans un matériau textile. La structure souple 24 pourra être réalisée dans un matériau rembourré ou matelassé. Une telle configuration permet de mieux isoler du bruit et de la lumière et améliorer ainsi le confort des membres de l'équipage. Le matériau textile pourra être uniformément plissé afin de minimiser les plis disgracieux du rideau dus au rangement. La structure souple 24 pourra prendre la forme d'un panneau déformable.

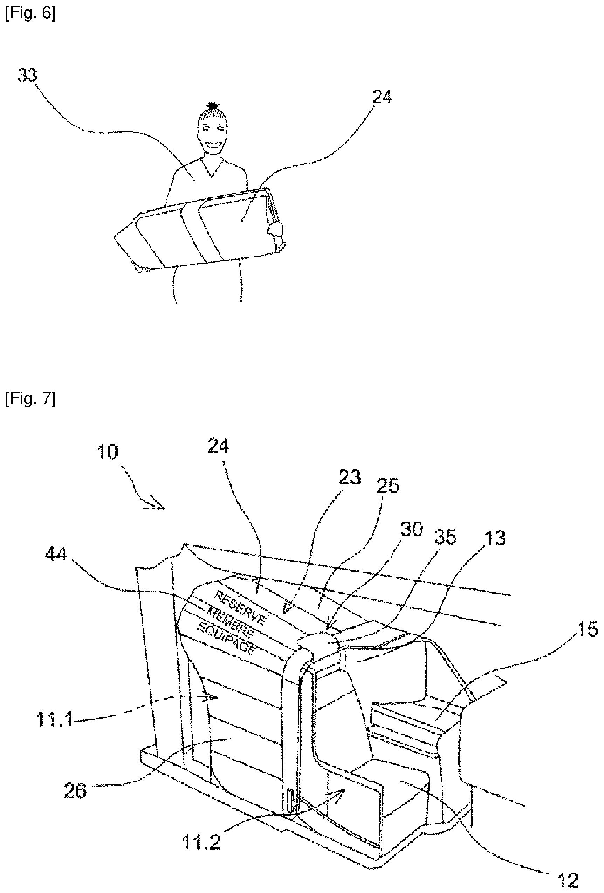

La structure souple 24 pourra comporter un marquage 44 sous forme d'un texte et/ou d'un symbole indiquant que le rideau délimite un espace clos de repos 23 réservé aux membres d'équipage, tel que montré sur les figures 2 et 7. Cela permet de clarifier son utilité auprès des passagers. Avantageusement, la structure souple 24 est personnalisable aux couleurs de la compagnie aérienne.

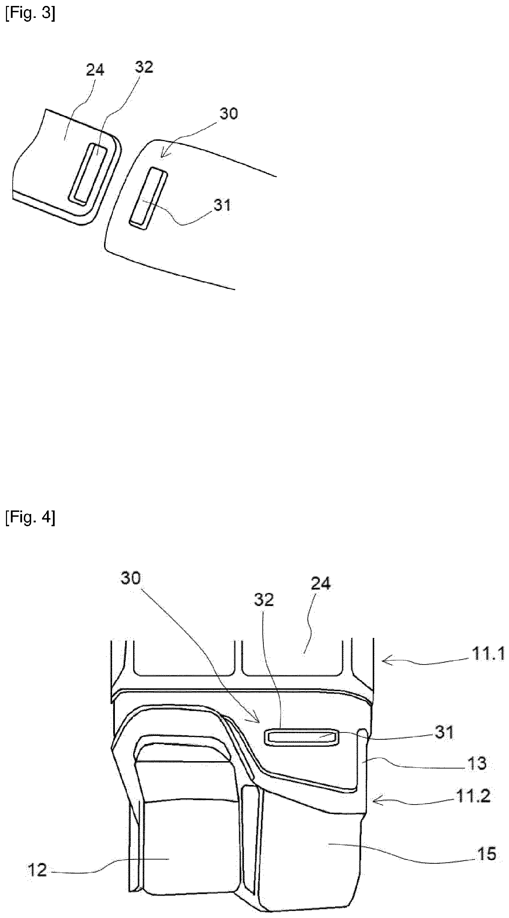

Au moins un dispositif de maintien 30 est apte à fixer la structure souple 24 sur une coque d'intimité 13 d'au moins une unité de siège 11.1, 11.2. Comme on peut le voir sur les figures 3 et 4, le dispositif de maintien 30 comporte au moins un plot saillant 31 ménagé dans une portion de la coque d'intimité 13 destiné à s'insérer à l'intérieur d'une ouverture 32 réalisée dans la structure souple 24 amovible. En variante, le plot saillant 31 pourrait être remplacé par un crochet destiné à coopérer avec l'ouverture 32 réalisée dans la structure souple 24 amovible. En variante, le dispositif de maintien 30 comporte des aimants intégrés dans la structure souple 24 destinés à coopérer avec des éléments métalliques ou magnétiques intégrés dans une unité de siège 11.1, 11.2, ou inversement. En variante, le dispositif de maintien 30 amovible comporte des attaches auto-agrippantes ménagées dans la structure souple 24 et destinées à coopérer avec des attaches auto-agrippantes de forme correspondante ménagées dans une unité de siège 11.1, 11.2. Les attaches auto-agrippantes pourront être par exemple des attaches de type Velcro (Marque déposée).

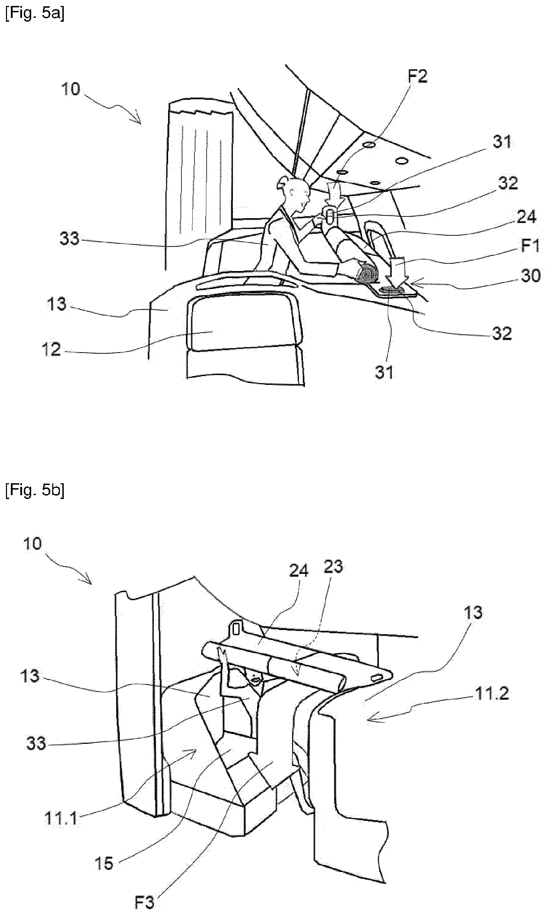

On décrit ci-après, en référence avec les figures 5a et 5b, l'installation de la structure souple 24 afin de créer un espace clos de repos 23 autour du siège 12 de l'unité de siège arrière 11.1. A cet effet, un bord avant de la structure souple 24 est fixé sur la coque de l'unité de siège avant 11.2 par insertion d'au moins un plot 31 à l'intérieur d'une ouverture 32 correspondante ménagée dans la structure souple 24. A cet effet, un membre d'équipage 33 pourra appuyer sur la structure souple suivant la flèche F1 pour faire pénétrer le plot 31 à l'intérieur de l'ouverture 32 correspondante, tel que cela est montré sur la figure 5a.

Le bord arrière de la structure souple 24 pourra également être connecté sur la coque du siège 12 arrière et/ou à une paroi de la cabine d'avion 10 par un dispositif analogue à plot saillant 31 et ouverture 32 correspondante ménagée dans la structure souple 24. Le membre d'équipage 33 pourra ainsi mettre en place le bord arrière de la structure souple 24 suivant la flèche F2.

Il suffit ensuite au membre d'équipage 33 de déplier progressivement la structure souple 24 au-dessus de l'unité de siège arrière 11.1 suivant la flèche F3, de façon que la structure souple 24 ferme l'espace clos de repos 23 via la portion supérieure 25 et la portion latérale 26.

Comme cela est illustré par la figure 6, une fois que la structure souple 24 est désengagée des plots 31, la structure souple 24 peut être pliée et rangée facilement et de façon compacte à l'intérieur d'un espace de l'avion prévu à cet effet. Cet espace de rangement pourra être par exemple un espace prévu dans un meuble ou dans un compartiment à bagages.

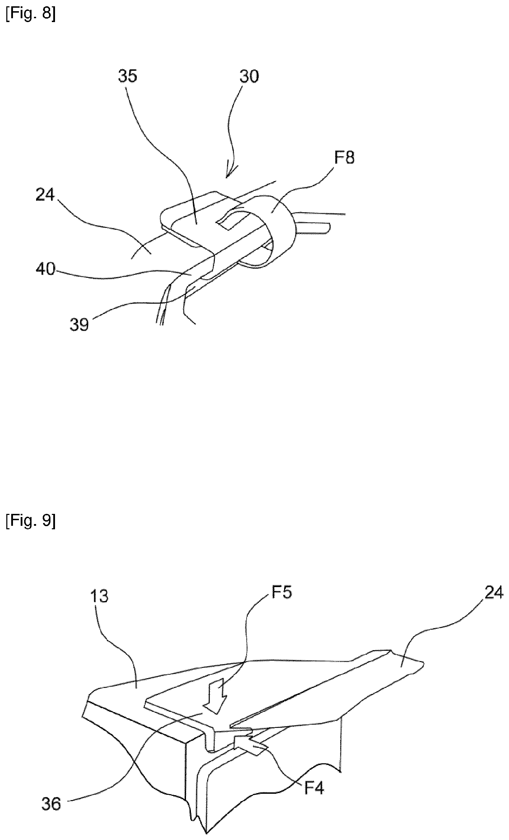

Dans le mode de réalisation de la figue 7, le dispositif de maintien 30 de la structure souple 24 comporte un rabat 35 relié à la structure souple 24. Le rabat 35 bien visible sur la figure 8 est destiné à être fixé sur une portion d'une coque d'intimité 13. Le rabat 35 pourra être réalisé dans un matériau plus rigide que le reste du rideau. Le rabat 35 est avantageusement réalisé dans un matériau plastique souple déformable, ou du caoutchouc, ou tout autre matériau adapté à l'application. Le rabat 35 présente une forme en U de façon à pouvoir entourer au moins partiellement une portion de la coque d'intimité 13.

Comme on peut le voir sur la figure 9, la structure souple 24 pourra également comporter au moins un élément d'appui 36 destiné à venir se plaquer contre une portion d'une coque d'intimité 13. L'élément d'appui 36 permet ainsi de garantir un indexage correct en position de la structure souple 24 par rapport à une coque d'intimité 13. L'élément d'appui 36 présente une forme en L dont l'angle est plaqué, suivant les flèches F4 et F5, contre un angle correspondant d'une portion d'une coque d'intimité 13 d'une unité de siège. L'élément d'appui 36 pourra être ménagé dans un bord de la structure souple 24. L'élément d'appui 36 pourra être constitué par une portion rigidifiée d'un bord de la structure souple 24.

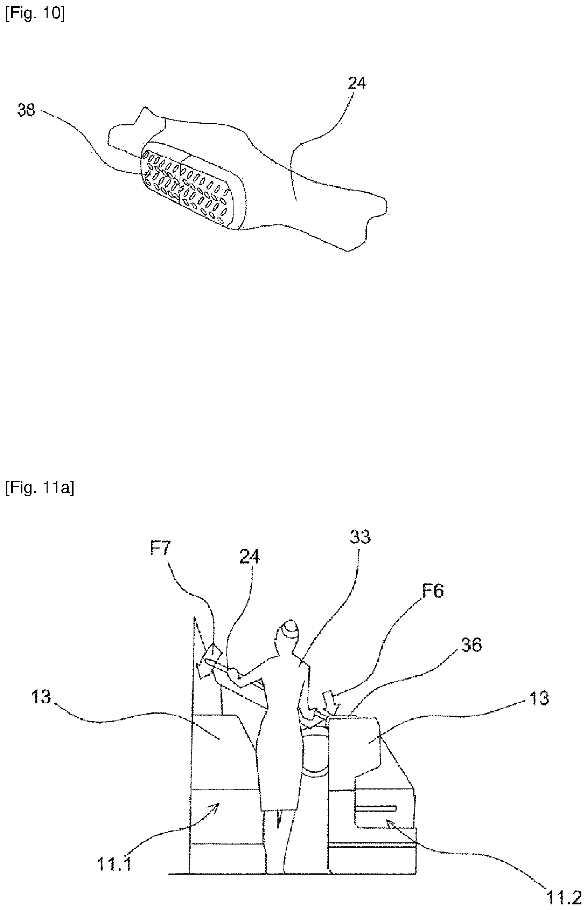

Comme cela est illustré par la figure 10, il est également possible d'utiliser un ou plusieurs inserts de positionnement 38, notamment de forme allongée, réalisés dans un matériau élastique. Les inserts de positionnement 38 sont par exemple réalisés en caoutchouc. En venant en appui contre une zone correspondante d'une coque d'intimité 13 ou d'une paroi de la cabine d'avion 10, ces inserts de positionnement 38 participent également au positionnement correct ainsi qu'au maintien de la structure souple 24 pour former l'espace clos de repos 23.

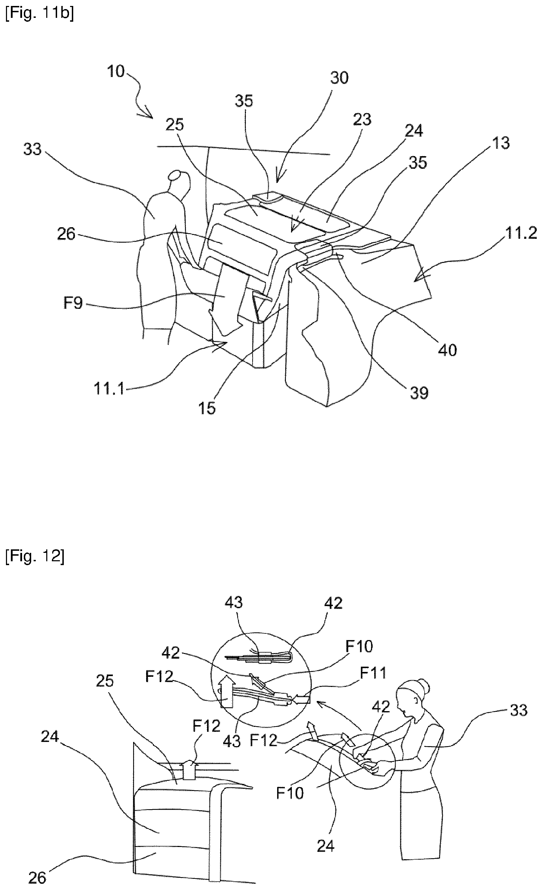

On décrit ci-après, en référence avec les figures 11a et 11b, l'installation de la structure souple 24 munie de rabats 35 afin de créer un espace clos de repos 23 autour du siège 12 de l'unité de siège arrière 11.1.

Tout d'abord, l'élément d'appui 36 issu du bord avant de la structure souple 24 est plaqué suivant la flèche F6 contre une forme correspondante de la coque du siège 12 avant. Le bord opposé de la structure souple 24 est mis en place suivant la flèche F7.

Le rabat 35 est ensuite mis en place afin d'attacher la structure souple 24 à la coque d'intimité 13 de l'unité de siège avant 11.2. A cet effet, comme cela est représenté sur la figure 8, le rabat 35 est inséré via une extrémité libre à l'intérieur d'une ouverture 39 délimitée par une portion longitudinale 40 et le reste de la coque d'intimité 13 de l'unité de siège avant 11.2. Le rabat 35 est ensuite tourné suivant la flèche F8 de telle manière que la forme en U entoure partiellement la portion 40 de la coque d'intimité 13. Un rabat 35 analogue connecté à un bord arrière de la structure souple 24 pourra également être attaché à la coque d'intimité 13 de l'unité de siège arrière 11.1.

Comme cela est représenté sur la figure 11b, il suffit ensuite au membre d'équipage 33 de déplier progressivement la structure souple 24 au-dessus de l'unité de siège arrière 11.1 suivant la flèche F9, de sorte que la structure souple 24 ferme l'espace de repos 23 via la portion supérieure 25 et la portion latérale 26.

Les inserts 38 en caoutchouc pourront permettre d'améliorer le positionnement et le maintien de la structure souple 24.

Une fois que les rabats 35 sont détachés des coques d'intimité 13, la structure souple 24 peut être pliée et rangée facilement et de façon compacte à l'intérieur d'un espace de l'avion prévu à cet effet, comme par exemple un espace prévu dans un meuble ou dans un compartiment à bagages.

Afin d'améliorer l'ergonomie et le confort des membres d'équipage, la structure souple 24 pourra être munie d'une sangle 42 montrée sur la figure 12. Une portion structurelle 43 liée à la structure souple 24 est disposée en partie à l'intérieur d'un espace en forme de U délimité par la sangle 42. En tirant sur une extrémité de la sangle 42 suivant la flèche F10, le fond du U de la sangle 42 pousse la portion structurelle 43 vers l'intérieur de l'espace clos de repos 23 suivant la flèche F11. Cela a pour effet de déformer vers le haut la structure souple 24 suivant la flèche F12 de façon à augmenter un volume de l'espace clos de repos 23.

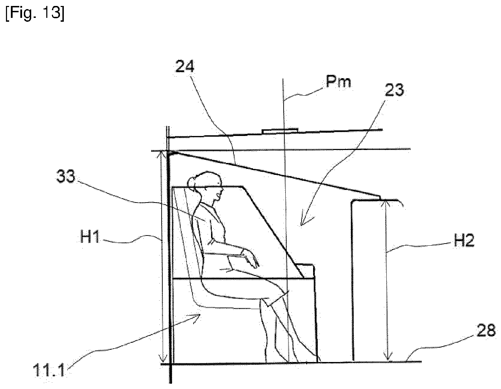

Comme cela est illustré sur la figure 13, la structure souple 24 pourra présenter une configuration asymétrique par rapport à un plan transversal médian Pm de sorte qu'une hauteur H1 de la structure souple 24 mesurée par rapport au plancher 28 de la cabine d'avion 10 à l'endroit de la coque d'intimité 13 de l'unité de siège arrière 11.1 est supérieure à une hauteur H2 de la structure souple 24 mesurée par rapport au plancher 28 à l'endroit de la coque d'intimité 13 de l'unité de siège avant 11.2 .

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.
En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, dans la mesure où elles s'inscrivent dans le cadre des revendications annexées.

## Revendications

1. Ensemble pour une cabine d'aéronef (10) dans lequel:
- une unité de siège arrière (11.1) comportant un siège (12) et une coque d'intimité (13) s'étendant au moins en partie autour du siège (12),
- une unité de siège avant (11.2) comportant un siège (12) et une coque d'intimité (13) s'étendant au moins en partie autour du siège (12),
- un passage d'accès à un couloir de circulation s'étendant entre l'unité de siège arrière (11.1) et l'unité de siège avant (11.2),
- une structure souple (24) amovible comportant, dans un état déployé, une portion supérieure (25) s'étendant au-dessus du siège (12) de l'unité de siège arrière (11.1) entre la coque d'intimité (13) de l'unité de siège arrière (11.1) et la coque d'intimité (13) de l'unité de siège avant (11.2), et
- une portion latérale (26) s'étendant verticalement entre l'unité de siège arrière (11.1) et l'unité de siège avant (11.2) pour obturer le passage d'accès au couloir de circulation,
- de sorte que la structure souple (24) délimite, avec la coque de l'unité de siège arrière (11.1) et la coque de l'unité de siège avant (11.2), un espace clos de repos (23) autour du siège (12) de l'unité de siège arrière (11.1).

2. Ensemble selon la revendication 1, dans lequel au moins un dispositif de maintien (30) est apte à assurer un maintien de la structure souple (24) sur une coque d'intimité (13).

3. Ensemble selon la revendication 2, dans lequel le dispositif de maintien (30) comporte au moins un plot saillant (31) ménagé dans une portion de la coque d'intimité (13) destiné à s'insérer à l'intérieur d'une ouverture (32) réalisée dans la structure souple (24).

4. Ensemble selon la revendication 2 ou 3, dans lequel le dispositif de maintien (30) comporte un rabat (35) relié à la structure souple (24), ledit rabat (35) étant destiné à être fixé sur une portion de la coque d'intimité (13).

5. Ensemble selon la revendication 4, dans lequel le rabat (35) présente une forme en U de façon à pouvoir entourer au moins partiellement une portion de la coque d'intimité (13).

6. Ensemble selon l'une quelconque des revendications 1 à 5, dans lequel la structure souple (24) comporte un élément d'appui (36) destiné à venir se plaquer contre une portion d'une coque d'intimité (13).

7. Ensemble selon l'une quelconque des revendications 1 à 6, dans lequel la structure souple (24) comporte au moins un insert de positionnement (38) destiné à venir en appui contre une zone correspondante d'une unité de siège (11.1, 11.2) ou d'une paroi de la cabine d'aéronef (10).

8. Ensemble selon l'une quelconque des revendications 1 à 7, dans lequel la structure souple (24) est munie d'au moins une sangle (42) de façon à pouvoir augmenter un volume interne de l'espace clos de repos (23).

9. Ensemble selon l'une quelconque des revendications 1 à 8, dans lequel la structure souple (24) présente une configuration asymétrique par rapport à un plan transversal médian (Pm), de sorte qu'une hauteur (H1) de la structure souple (24) mesurée par rapport à un plancher (28) à l'endroit de la coque d'intimité (13) de l'unité de siège arrière (11.1) est supérieure à une hauteur (H2) de la structure souple (24) mesurée par rapport au plancher (28) à l'endroit de la coque d'intimité (13) de l'unité de siège avant (11.2).

10. Ensemble selon l'une quelconque des revendications 1 à 9, dans lequel la structure souple (24) comporte un marquage (44) sous forme d'un texte et/ou d'un symbole indiquant que la structure souple (24) délimite un espace clos de repos (23) réservé aux membres d'équipage.

## Patentansprüche

1. Anordnung für eine Flugzeugkabine (10), umfassend:
- eine hintere Sitzeinheit (11.1) mit einem Sitz (12) und einer sich zumindest teilweise um den Sitz (12) erstreckenden Sichtschutzschale (13),
- eine vordere Sitzeinheit (11.2) mit einem Sitz (12) und einer sich zumindest teilweise um den Sitz (12) erstreckenden Sichtschutzschale (13),
- einen zwischen der hinteren Sitzeinheit (11.1) und der vorderen Sitzeinheit (11.2) verlaufenden Passage zu einem Kabinengang,
- eine abnehmbare flexible Struktur (24), die in einem entfalteten Zustand einen oberen Abschnitt (25) umfasst, der sich über dem Sitz (12) der hinteren Sitzeinheit (11.1) zwischen der Sichtschutzschale (13) der hinteren Sitzeinheit (11.1) und der Sichtschutzschale (13) der vorderen Sitzeinheit (11.2) erstreckt, und
- einen sich vertikal zwischen der hinteren Sitzeinheit (11.1) und der vorderen Sitzeinheit (11.2) erstreckenden Seitenabschnitt (26) zum Verschließen de Passage zum Kabinengang,
- so dass die flexible Struktur (24) mit der Schale der hinteren Sitzeinheit (11.1) und der Schale der vorderen Sitzeinheit (11.2) einen geschlossenen Ruheraum (23) um den Sitz (12) der hinteren Sitzeinheit (11.1) begrenzt.

2. Anordnung nach Anspruch 1, wobei mindestens eine Haltevorrichtung (30) in der Lage ist, die flexible Struktur (24) auf einer Sichtschutzschale (13) zu halten.

3. Anordnung nach Anspruch 2, wobei die Haltevorrichtung (30) mindestens einen hervorstehenden Bolzen (31) in einem Abschnitt der Sichtschutzschale (13) umfasst, wobei der hervorstehende Bolzen so vorgesehen ist, dass er in eine Öffnung (32) in der flexiblen Struktur (24) eingeführt werden kann.

4. Anordnung nach Anspruch 2 oder 3, wobei die Haltevorrichtung (30) eine mit der flexiblen Struktur (24) verbundene Klappe (35) umfasst, wobei die Klappe (35) so vorgesehen ist, dass sie an einem Abschnitt der Sichtschutzschale (13) befestigt werden kann.

5. Anordnung nach Anspruch 4, wobei die Klappe (35) eine U-Form aufweist, so dass sie zumindest teilweise einen Abschnitt der Sichtschutzschale (13) umschließt.

6. Anordnung nach einem der Ansprüche 1 bis 5, wobei die flexible Struktur (24) ein Stützelement (36) zum Andrücken an einen Abschnitt einer Sichtschutzschale (13) umfasst.

7. Anordnung nach einem der Ansprüche 1 bis 6, wobei die flexible Struktur (24) mindestens einen Positionierungseinsatz (38) zur Anlage an einem entsprechenden Bereich einer Sitzeinheit (11.1, 11.2) oder einer Wand der Flugzeugkabine (10) aufweist.

8. Anordnung nach einem der Ansprüche 1 bis 7, wobei die flexible Struktur (24) mit mindestens einem Riemen (42) zum Vergrößern eines Innenvolumens im geschlossenen Ruheraum (23) versehen ist.

9. Anordnung nach einem der Ansprüche 1 bis 8, wobei die flexible Struktur (24) eine asymmetrische Konfiguration relativ zu einer mittleren Querebene (Pm) aufweist, so dass eine Höhe (H1) der flexiblen Struktur (24), gemessen relativ zu einem Boden (28) an der Sichtschutzschale (13) der hinteren Sitzeinheit (11.1), größer als eine Höhe (H2) der flexiblen Struktur (24), gemessen relativ zu dem Boden (28) an der Sichtschutzschale (13) der vorderen Sitzeinheit (11.2) ist.

10. Anordnung nach einem der Ansprüche 1 bis 9, wobei die flexible Struktur (24) eine Markierung (44) in Form eines Textes und/oder eines Symbols umfasst, um anzuzeigen, dass die flexible Struktur (24) einen geschlossenen Ruheraum (23) für Besatzungsmitglieder abgrenzt.

## Claims

1. An assembly for an aircraft cabin (10), comprising:
- a rear seat unit (11.1) comprising a seat (12) and a privacy shell (13) extending at least partly around the seat (12),
- a front seat unit (11.2) comprising a seat (12) and a privacy shell (13) extending at least partly around the seat (12),
- an aisle access passage extending between the rear seat unit (11.1) and the front seat unit (11.2),
- a removable flexible structure (24) comprising, in a deployed state, an upper portion (25) extending above the seat (12) of the rear seat unit (11.1) between the privacy shell (13) of the rear seat unit (11.1) and the privacy shell (13) of the front seat unit (11.2), and
- a lateral portion (26) extending vertically between the rear seat unit (11.1) and the front seat unit (11.2) for closing the access passage to the aisle,
- such that the flexible structure (24) delimits, with the shell of the rear seat unit (11.1) and the shell of the front seat unit (11.2), an enclosed rest space (23) around the seat (12) of the rear seat unit (11.1).

2. The assembly according to claim 1, wherein at least one holding device (30) is capable of holding the flexible structure (24) on a privacy shell (13).

3. The assembly according to claim 2, wherein the holding device (30) comprises at least one projecting stud (31) in a portion of the privacy shell (13), said projecting stud being providing so as to be inserted into an opening (32) in the flexible structure (24).

4. The assembly according to claim 2 or 3, wherein the holding device (30) comprises a flap (35) connected to the flexible structure (24), said flap (35) being provided so as to be fixed on a portion of the privacy shell (13).

5. The assembly according to claim 4, wherein the flap (35) has a U shape so as to surround at least partially a portion of the privacy shell (13).

6. The assembly according to any of the claims 1 to 5, wherein the flexible structure (24) comprises a support element (36) for pressing against a portion of a privacy shell (13).

7. The assembly according to any of the claims 1 to 6, wherein the flexible structure (24) comprises at least one positioning insert (38) for contacting a corresponding zone of a seat unit (11.1, 11.2) or a wall of the aircraft cabin (10).

8. The assembly according to any of the claims 1 to 7, wherein the flexible structure (24) is provided with at least one strap (42) for increasing an internal volume in the enclosed rest space (23).

9. The assembly according to any of the claims 1 to 8, wherein the flexible structure (24) has an asymmetrical configuration relative to a median transverse plane (Pm), such that a height (H1) of the flexible structure (24) measured relative to a floor (28) at the privacy shell (13) of the rear seat unit (11.1) is greater than a height (H2) of the flexible structure (24) measured relative to the floor (28) at the privacy shell (13) of the front seat unit (11.2).

10. The assembly according to any of the claims 1 to 9, wherein the flexible structure (24) comprises a marking (44) in the form of a text and/or a symbol for indicating that the flexible structure (24) delimits an enclosed rest space (23) for crew members.
